# EUROPEAN PATENT APPLICATION

(11) **EP 1 662 176 A2**
(43) Date of publication of application: **31.05.2006**
(21) Application number: 05026006.6
(22) Date of filing: 29.11.2005
(51) Int. Cl.: F16H 25/22, F16C 29/06

(54) **Linear motion device**

(30) Priority: 30.11.2004 JP 2004346277
(71) Applicant: NSK LTD., Shinagawa-ku, Tokyo 141-8560 (JP)
(72) Inventor: Ohkubo, Tsutomu, Fujisawa-shi Kanagawa 251-8501 (JP)
(74) Representative: Grünecker, Kinkeldey, Stockmair & Schwanhäusser Anwaltssozietät

(57) **Abstract**

The ball screw 1 includes: a screw shaft 2, on the outer circumferential surface of which a spiral screw groove 2a is formed; a nut, on the inner circumferential surface of which a screw groove 3a opposed to the screw shaft 2 is formed; and a plurality of balls 4 arranged in a rolling element rolling passage 6, which is formed between both the screw grooves 2a, 3a, under the condition that the plurality of balls 4 can be freely rolled. The nut 3 is fixed to a side cap 7 for scooping up the rolling balls 4 at one end of the rolling element rolling passage 6 so that the rolling balls 4 can be sent to the other end.

## Description

The present application claims foreign priority under 35 USC 119 based on Japanese Patent Application No. 2004-346277, filed on November 30, 2004, the contents of which is incorporated herein by reference in its entirety, and concurrently with the filing of this U.S. patent application.

### BACKGROUND OF THE INVENTION

The present invention relates to a linear motion device such as a ball screw or a linear guide.

A linear motion device such as a ball screw or a linear guide, which is linearly moved when rolling elements are rolled, includes a part for circulation (a rolling element circulating passage) in which the rolling elements are circulated. It is conventional to use a metallic pipe or a machined metallic part for the part of circulation. However, according to this conventional structure, problems are encountered from the viewpoints of noise and mechanical strength. For example, in the case of a ball screw (a tube circulation type ball screw) in which a metallic pipe is provided for the circulation part, when the balls are scooped up from the rolling element rolling passage and moved into the circulation part, the angle of each ball is changed by the lead angle and the scooping angle. Therefore, when the balls are driven at high speed, there is a possibility that the noise of high intensity is generated. Further, there is a possibility of lack of the mechanical strength of the circulation part. For the above reasons, it is difficult to raise the speed of driving the ball screw.

In order to raise the ball driving speed and reduce the generation of noise by solving the above problems, it is effective to scoop up the balls from the rolling element rolling passage by the tangential scooping system. That is, when end portions of the circulating part are arranged so that the end portions can substantially agree with the tangential direction of the rolling element rolling passage and the lead angle direction when the nut of the ball screw is viewed in the axial direction, it is possible to reduce a load given to the circulation part which is generated when the balls collide with the circulation parts at the time of scooping up the balls.

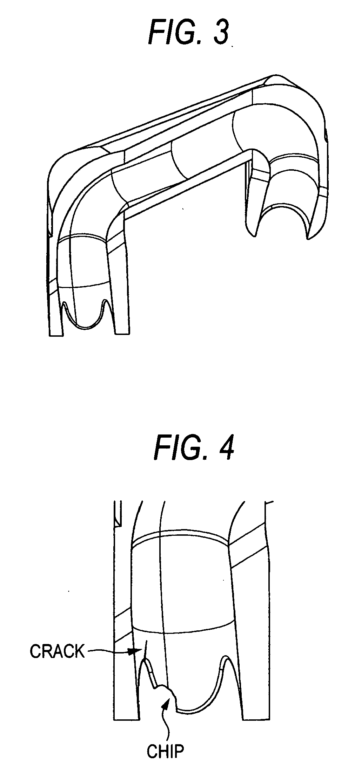

For example, Patent Documents 1 to 3 respectively propose a ball screw of the tangential scooping type. The circulation part provided in the ball screw of Patent Documents 1 and 2 is formed as shown in Fig. 3 and twisted in a direction so that the part can scoop up the balls. Therefore, a load, which is given to the circulation part when the balls collide with the circulation part, can be reduced. In this connection, only one component in the circulation part, in which two components are combined with each other, is shown in Fig. 3.

Since the shape of the circulation part described above is complicated, the circulation part is manufactured by means of injection molding in many cases. In order to reduce the manufacturing cost, it is preferable that the circulation part is manufactured by means of injection molding.

### [Patent Document 1]

JP-A-2004-108455

### [Patent Document 2]

JP-A-2005-083519

### [Patent Document 3]

Specification of Germany Utility Model No. 2437497

However, in order to change a ball moving direction, it is inevitable that a repeated load is given to the circulation part. Accordingly, in the case where the ball screw is driven at high speed, a so-called tongue portion, from which the balls are scooped up from the rolling element rolling passage, is damaged in many cases, that is, chips and cracks are caused in the tongue portion. Concerning the circumstances, refer to Fig. 4.

In the case where the ball screw is driven at high speed, heat is generated from the ball screw. Therefore, it is necessary that the circulation part is made of resin material exhibiting an excellent performance at high temperatures.

### SUMMARY OF THE INVENTION

The present invention has been accomplished to solve the above problems of the prior art. It is a task of the present invention to provide a linear motion device of the low noise type which is seldom damaged even when it is driven at high speed.

In order to solve the above problems, the present invention is constructed as follows. That is, the present invention of aspect 1 provides a linear motion device including: a guide member having a rolling element raceway surface and extending in the axial direction; a movable member having a rolling element raceway surface, which is opposed to the rolling element raceway surface of the guide member, supported by the guide member being capable of moving in the axial direction via the rolling of a plurality of rolling elements arranged in a rolling element rolling passage formed between both the rolling element raceway surfaces; and a rolling element circulating passage in which the rolling elements are circulated by sending the rolling elements from an end point of the rolling element rolling passage to a start point, wherein the rolling element circulating passage is made of resin material, the bending elastic modulus of which is not more than 5000 MPa and the Izod impact value (A notch is made in the specimen.) of which is not less than 5 kJ/m².

Since the rolling element circulating passage of the linear motion device is made of resin material described above, even when the linear motion device is driven at high speed, the rolling element circulating passage is seldom damaged. If the bending elastic modulus of the resin material exceeds 5000 MPa or the Izod impact value (A notch is made in the specimen.) is lower than 5 kJ/m², when the linear motion device is driven at high speed, the rolling element circulating passage is likely to be damaged. In this connection, the bending elastic modulus and the Izod impact value (A notch is made in the specimen.) described above are values measured at 23°C.

The present invention described in aspect 2 provides a linear motion device according to aspect 1, wherein the resin material is polyamide resin, the absorption coefficient of which is not less than 1 mass % and not more than 4 mass %.

According to the above constitution, even when the linear motion device is driven at high temperatures, the linear motion device is seldom damaged. In the case where the absorption ratio of polyamide resin is lower than 1 mass %, the bending elastic modulus and the Izod impact value are out of the above referable ranges, and the circulation part tends to be damaged. When the absorption ratio of polyamide resin exceeds 4 mass %, the dimensions are greatly changed because of water absorption.

The present invention described in aspect 3 provides a linear motion device according to aspect 1 or 2, wherein end portions of the rolling element circulating passage are arranged in the tangential direction of the rolling element rolling passage at the start point and the end point of the rolling element rolling passage, and the rolling elements are moved between the rolling element rolling passage and the rolling element circulating passage in the tangential direction.

According to the linear motion device described above, for example, when the rolling elements are scooped up from the rolling element rolling passage to the rolling element circulating passage, the rolling elements are moved along the tangential direction of the rolling element rolling passage, that is, the rolling elements are scooped up along the tangent. Therefore, it is possible to reduce a load which is given to the rolling element circulating passage when the rolling elements collide with the rolling element circulating passage. Accordingly, even when the linear motion device is driven at high speed, an intensity of the generated noise is low and the rolling element circulating passage is seldom damaged. Examples of the rolling element circulating passage in which the rolling elements are scooped up along the tangent are: a tube circulation type, a side cap type and an end difference type.

In this connection, the present invention can be applied to various linear motion devices. For example, the present invention can be applied to a ball screw, a linear guide and a linear guide bearing.

The guide member of the present invention is defined as follows. In the case where the linear motion device is a ball screw, the guide member is a screw shaft. In the case where the linear motion device is a linear guide, the guide member is a guide rail. In the case where-the linear motion device is a linear guide bearing, the guide member is a shaft. The movable member of the present invention is defined as follows. In the case where the linear motion device is a ball bearing, the movable member is a nut. In the case where the linear motion device is a linear guide, the movable member is a slider. In the case where the linear motion device is a linear guide bearing, the movable member is an outer cylinder.

In the linear motion device of the present invention, the rolling element circulating passage is made of resin material having a predetermined mechanical property. Therefore, even when the linear motion device of the present invention is driven at high speed, it is difficult for the rolling element circulating passage to be damaged.

### BRIEF DESCRIPTION OF THE DRAWINGS

Fig. 1 is a plan view showing a ball screw which is an embodiment of the linear motion device of the present invention.
Fig. 2 is a view of the ball screw shown in Fig. 1, wherein the view is taken in the axial direction.
Fig. 3 is a perspective view for explaining a shape of the side cap.
Fig. 4 is a partial enlarged view for explaining damage caused in a tongue of the side cap.

### DETAILED DESCRIPTION OF THE PREFERRED EMBODIMENTS

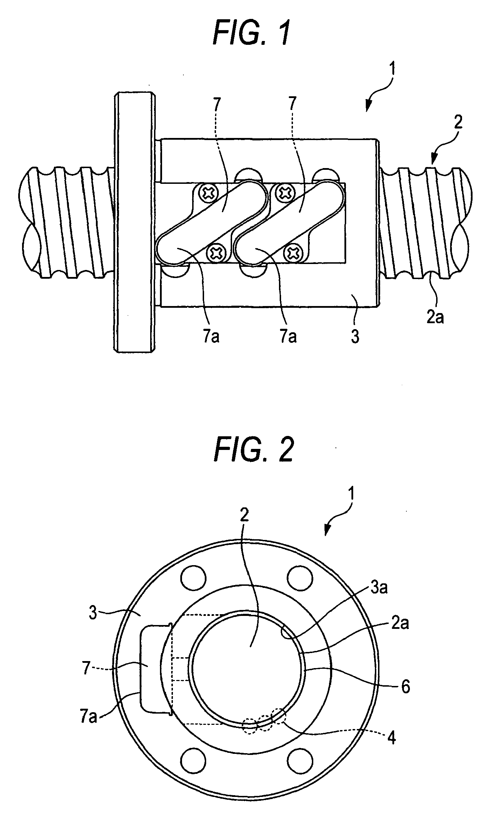

Referring to the accompanying drawings, an embodiment of the linear motion device of the present invention will be explained in detail. Fig. 1 is a plan view showing a ball screw which is an embodiment of the linear motion device of the present invention. Fig. 2 is a view of the ball screw shown in Fig. 1, wherein the view is taken in the axial direction.

The ball screw 1 shown in Figs. 1 and 2 includes: a screw shaft (guide member) 2, on the outer circumferential surface of which a spiral screw groove (rolling element raceway surface) 2a is formed, extending in the axial direction; a nut (movable member), on the inner circumferential surface of which a screw groove (rolling element raceway surface) 3a opposed to the screw shaft 2 is formed; and a plurality of balls (rolling elements) 4 arranged in a rolling element rolling passage 6, which is formed between both the screw grooves 2a, 3a, under the condition that the plurality of balls 4 can be freely rolled.

The side cap (rolling element circulating passage) 7, in which the rolling balls 4 are scooped up at one end (end point) of the rolling element circulating passage and sent to the other end (start point), is fixed to the nut 3 with the cap presser 7a.

In this ball screw 1, when the screw shaft 2 and the nut 3 are relatively rotated via the rolling of the plurality of balls 4, the screw shaft 2 and the nut 3 are relatively moved in the axial direction.

Since the side cap 7 is made of resin material, the bending elastic modulus is not more than 5000 MPa and the Izod impact value (A notch is made in the specimen.) of which is not less than 5 kJ/m², even when the ball screw 1 is driven at high speed or even when the ball screw 1 is heated at high temperature, the side cap 7 is seldom damaged. Although the type of the resin material is not particularly limited, examples of the resin material are polyoxymethylene (POM) and polyamide resin. An example of the polyamide resin is an aliphatic polyamide resin such as 46 nylon or 66 nylon. It is preferable that the absorption coefficient is not less than 1 mass % and not more than 4 mass %. This resin material may contain a reinforcing agent and an addition agent.

In this ball screw 1, the balls 4 are scooped up in the tangential direction. The end portions of the side cap 7 are arranged in the tangential direction of the rolling element rolling passage at the start paint and the end point of the rolling element rolling passage, that is, when the nut 3 is viewed in the axial direction, the end portions of the side cap are arranged in the tangential direction of the spiral rolling element rolling passage 6. Therefore, the balls 4 are moved between the rolling element rolling passage 6 and the side cap 7 in the tangential direction described above. Therefore, a load given to the side cap 7 when the balls 4 collide with the side cap 7 can be reduced. Accordingly, even when the ball screw 1 is driven at high speed, an intensity of the generated noise is low, and the side cap is seldom damaged.

In this connection, this embodiment is an example of the present invention. It should be noted that the present invention is not limited to the above specific embodiment. For example, in this embodiment, the example is shown in which the side cap is used for the rolling element circulating passage to scoop up the rolling elements. However, any of the rolling element circulating passage such as an end cap type or an end deflector type may be adopted.

### [Embodiment]

Referring to an embodiment, the present invention will be more specifically explained below. The ball screws are prepared as follows. In the above ball screws, the resin materials of -the side caps 7 are variously changed. Then, the thus prepared ball screws 1 are driven at high speeds, and the running distances of the nuts 3, in which the nuts 3 ran until the tongue portions of the side caps 7 are damaged, are measured.

The specification and the drive conditions of the ball screw are as follows.
Diameter of screw shaft: 50 mm
Lead: 12 mm
Diameter of ball: 7.9375 mm
Maximum feed speed: 0.8 m/s (Rotating speed: 4000 rpm)
Stroke: 500 mm
Temperature of outer diameter of nut: 80°C
Types of the resin materials are polyoxymethylene (POM), 46 nylon, 66 nylon, polyphenylene sulfide (PPS), and polyether etherketone (PEEK).

The bending elastic moduli and the Izod impact values at 23°C of these resin materials and the results of the test are shown on Table 1.

**[Table 1]**

| Type of resin material¹⁾ | POM | 46 nylon | 66 nylon | PPS | PEEK |
|---|---|---|---|---|---|
| Bending elastic modulus²⁾ | 2700 | 3200 | 2950 | 3900 | 38000 |
| Izod impact value | 7 | 9 | 5.5 | 2.5 | 9 |
| Running distance³⁾ | 1000 | 1200 | 1100 | 100 | 400 |

| | | | | | |
|---|---|---|---|---|---|
| 1) Unit: MPa | | | | | |
| 2) Unit: kJ/m² | | | | | |
| 3) Unit: km | | | | | |

As can be understood from the results shown on Table 1, in the case of the resin materials, the bending elastic modulus of which is not more than 5000 MPa and the Izod impact value (A notch is made in the specimen.) of which is not less than 5 kJ/m², the running distance is not less than 1000 km. Therefore, the ball screw succeeded in the test. In this connection, concerning PPS and PEEK, damage is caused and it became impossible to drive anymore at an early stage of the running distance of not more than 500 km. However, concerning POM and the two types of nylon, damage is small. Therefore, even after the test is completed because of the occurrence of damage, it is possible to drive the ball screw.

In the case of PEEK which is a resin material, the Izod impact value of which is high, however, the bending elastic modulus of which is excessively high, and in the case of PPS which is a resin material, the bending elastic modulus of which is low, however, the Izod impact value of which is not sufficiently high, a thin portion such as a tongue portion is likely to be damaged, that is, chips and cracks tend to be caused. In this connection, there is no correlation between the tensile strength of the resin material and the damage caused in the side cap.

In the case of the two types of nylon, when water is absorbed, it becomes possible to obtain an appropriate value of the bending elastic modulus and it is also becomes possible to obtain an appropriate value of the Izod impact value. Therefore, the occurrence of damage of the circulating parts can be suppressed. However, when water is absorbed, the dimensions are changed. Accordingly, it is preferable that the water absorption ratio of nylon is not less than 1 mass % and not more than 4 mass %. In this case, the absolute dry condition is 0 mass %.

## Claims

1. A linear motion device comprising:
a guide member having a rolling element raceway surface and extending in the axial direction;
a movable member having a rolling element raceway surface, which is opposed to the rolling element raceway surface of the guide member, supported by the guide member being capable of moving in the axial direction via the rolling of a plurality of rolling elements arranged in a rolling element rolling passage formed between both the rolling element raceway surfaces; and
a rolling element circulating passage in which the rolling elements are circulated by sending the rolling elements from an end point of the rolling element rolling passage to a start point, wherein
the rolling element circulating passage is made of resin material, the bending elastic modulus of which is not more than 5000 MPa and the Izod impact value, in which a notch is made, of which is not less than 5 kJ/m².

2. The linear motion device according to claim 1, wherein
the resin material is polyamide resin, the absorption coefficient of which is not less than 1 mass % and not more than 4 mass %.

3. The linear motion device according to claim 1, wherein
end portions of the rolling element circulating passage are arranged in the tangential direction of the rolling element rolling passage at the start point and the end point of the rolling element rolling passage, and
the rolling elements are moved between the rolling element rolling passage and the rolling element circulating passage in the tangential direction.
